# EUROPEAN PATENT APPLICATION

(11) **EP 2 364 582 A2**
(43) Date of publication of application: **14.09.2011**
(21) Application number: 11156342.5
(22) Date of filing: 01.03.2011
(51) Int. Cl.: A01B 71/04

(54) **Disk gang assembly**

(30) Priority: 12.03.2010 US 722687
(71) Applicant: Deere & Company, Moline, IL 61265-8098 (US)
(72) Inventor: Connel, Richard Joseph, Slater, IA 50244 (US); Beeck, Mark Donald, Ankeny, IA 50023 (US); Royer, Anthony Scott, Minburn, IA 50167 (US); Hackert, Ryan Anthony, Oskaloosa, IA 52577 (US)
(74) Representative: Reichert, Christian

(57) **Abstract**

A disk gang assembly (10) includes a disk gang shaft (30) supported by a standard-mounted disk gang bearing assembly (20) having an inner race (20a) receiving a mounting portion (30m) of the disk gang shaft (30). A non-metallic anti-corrosive shaft liner (50) supported over the mounting portion(30m) between the inner race (20a) and the mounting portion (30m) protects the mounting portion from impacts and from seizure of the inner race (20a) and provides a tight fit between the shaft mounting portion (30m) and the inner race (20a) without need for close manufacturing tolerances. The shaft liner (50) aligns the bearing, spacers and washers relative to the shaft (30) and accommodates slight misalignments of the shaft (30), bearing inner race (20a) and any spacing components (34,36,37,38) between disk blades (32,32a,32b). A split (52) generally along an axis parallel to an axis (30a) of the disk gang shaft (30) facilitates assembly of the liner (50) unto the shaft (30).

## Description

A disk gang assembly including a disk gang shaft supported from a disk frame by a standard, wherein the standard supporting a disk bearing having an inner race receiving a mounting portion of the disk gang shaft.

A disk gang typically includes an arbor bolt or shaft supported by standard-mounted bearings located between disks spaced along the length of the shaft. The shaft usually is round and has an outer diameter slightly less than the inner diameter of the supporting bearing. Clearance needed to maintain concentricity between the shaft and the bearing can result in corrosion. The corrosion causes seizure of the bearing on the shaft, and such seizure makes disk gang repair very difficult when bearing changes become necessary. At times, seizure of the bearing requires sawing or torching of the bearing for removal. In addition, since the bearing inner diameter must be specifically designed to fit the shaft, a shaft change can result in the need to provide a bearing specifically sized for the replacement shaft. Removal of the bearing also can be hindered by shaft damage. Some disk gang configuration include a square shaft with a steel spacer to provide proper fit between the inner race and the shaft, but the spacer can rust to the bearing and make repairs time-consuming and difficult.

Accordingly, an object of this invention is to provide an improved disc gang configuration.

The object will be achieved by the teaching of claims 1. Further advantageous embodiments are described within the accompanying claims.

Accordingly, a disc gang assembly of the above mentioned type is provided with a non-metallic anti-corrosive shaft liner supported over the mounting portion between the inner race of the disk bearing and mounting portion, wherein the liner protecting the mounting portion from seizure of the inner race.

A liner constructed of a non-corrosive material such as plastic fits between the disk gang shaft and the support bearing. The liner helps center the shaft within the inner race of the bearing to facilitate assembly of the gangs and protects the shaft against damage. The liner can be split along the axis, or at a slight diagonal relative to the axis, to provide a tight fit on the shaft and in the bearing without need for tight tolerances. The material and split allow the liner to be easily removed from the shaft during servicing of the disk gang and eliminates seizure of the bearing to the shaft and the need to use a saw or torch to remove the bearing. The liner is relatively inexpensive and easy to assemble on the shaft. Service time is reduced, and the need for special tools such as presses or torches is eliminated or reduced. These and other objects, features and advantages of the present invention will become apparent from a reading of the description which follows when taken with the drawings.
Fig. 1 is a perspective view of a portion of a disk gang assembly.

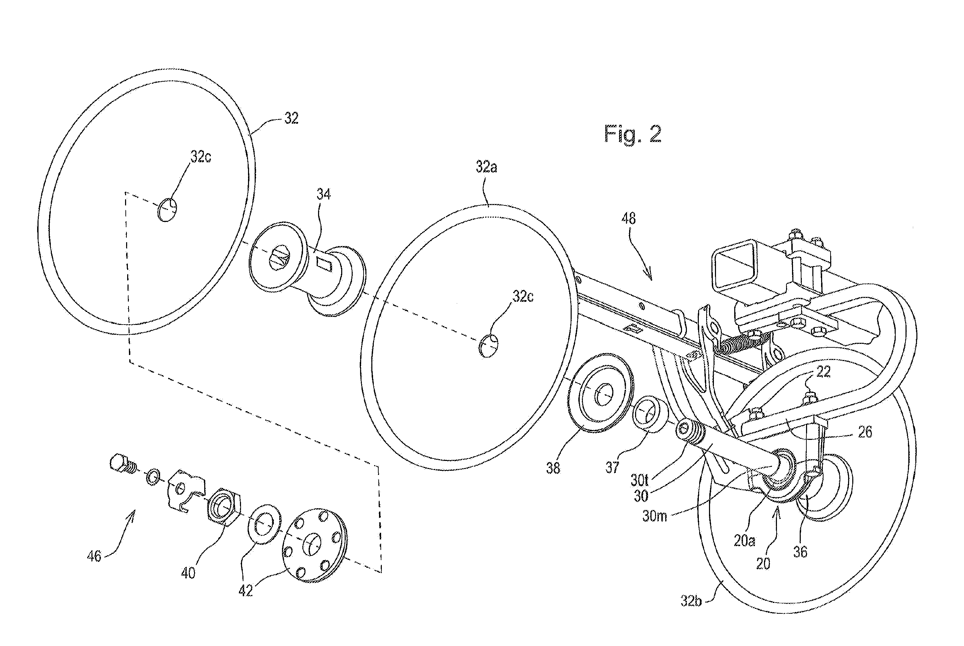

Fig. 2 is an exploded view of the disk gang assembly shown in Fig. 1 showing the disk shaft liner and support bearing.
Fig. 3 is an enlarged view of the liner and adjacent spacers removed from the disk shaft.

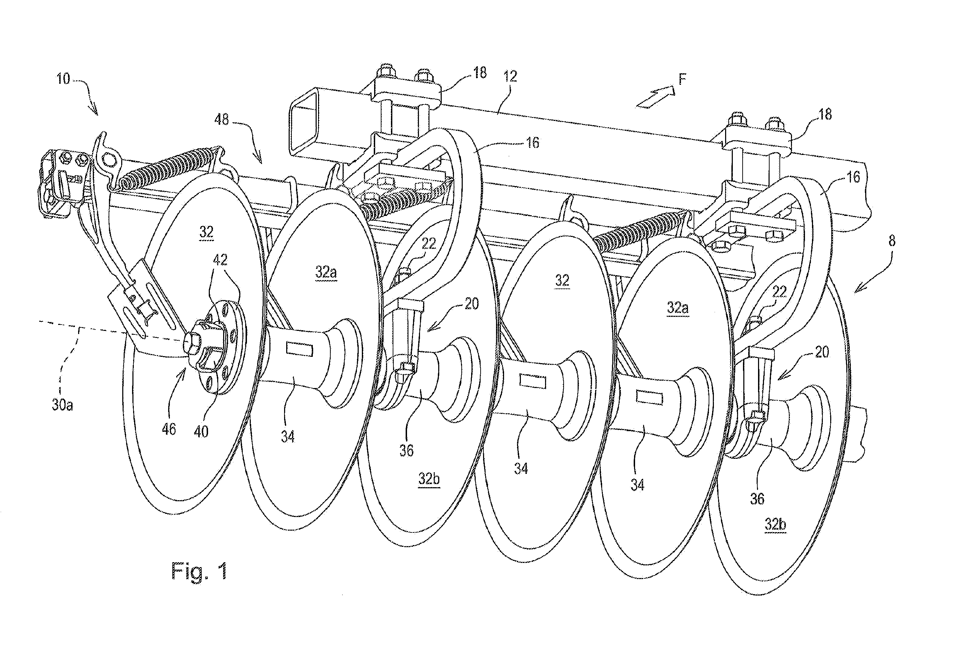

Referring to Fig. 1, therein is shown a portion of an agricultural disk 8 with a disk gang assembly 10. The disk 8 includes a disk frame 12 adapted for movement in the forward direction F over the ground to till the ground, break up clods, and incorporate plant residue into the soil. The frame 12 extends generally transversely to the forward direction F and supports a plurality of spaced C-spring gang mounting standards 16 made of spring steel. The standards 16 include upper ends connected by mounting brackets 18 to the frame 12.

A disk gang bearing assembly 20 with a bearing inner race 20a is connected by bolts 22 to a lower horizontally extending leg 26 of each of the standards 16. A disk gang bolt or shaft 30 with an axis 30a extends through the inner race 20a of the bearing assemblies 20 and supports a plurality of transversely spaced disk blades 32, 32a and 32b having central circular apertures 32c received over the shaft 30. Spacing components 34, 36, 37 and 38 are interposed between the disk blades 32, 32a and 32b. As shown, the spacing component 34 comprises a full spool sandwiched between a pair of adjacent disk blades at locations other than the locations of the bearing assemblies 20. The spacing component 36 is a half spool positioned between inner race 20a of the bearing assembly 20 and the hub of the adjacent disk blade 32b. The components 37 and 38 include a cylindrical spacer and a washer, respectively, sandwiched between the inner race 20a and the hub of the disk blade 32a. A tensioning nut 40 is tightened on a threaded end 30t of the disk gang shaft 30 against end washers 42 abutting the outermost disk blade 32 to sandwich the mounted disk blades 32, 32a and 32b, spacing components 36, 37 and 38 and inner races 20a of the supporting bearing assemblies 20 for rotation in unison about the shaft axis 30a. A nut retaining assembly 46 is supported in the end of the shaft 30 to prevent the tensioning nut 40 from unthreading from the shaft. A conventional disk blade scraper assembly 48 is supported from the frame 12 for clearing mud and debris.

As shown, the disk gang shaft 30 has a cylindrical surface. The inner diameter of the inner race 20a is slightly larger than the shaft diameter to receive the shaft 30 and accommodate manufacturing tolerances between the inner race 20a and the shaft 30. As a result, slight gaps may exist between a mounting portion 30m the shaft 30 and the inner race 20a. The harsh operating environment of an agricultural disk and the subjection of the disk gang assembly 10 to corrosive conditions can result in damage to the mounting portion 30m and corrosion between the surface of the mounting portion and the inner race 20a.

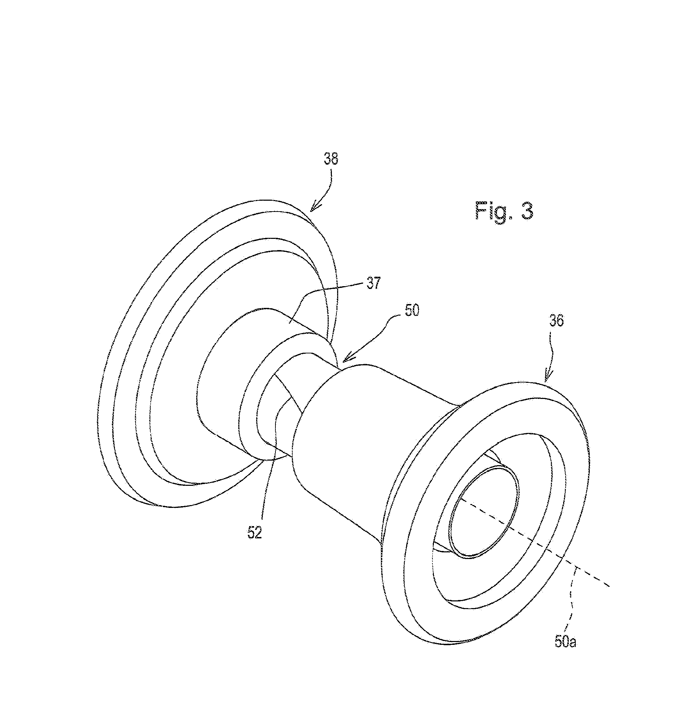

To fill any gaps between the inner race 20a and the mounting portion 30m, prevent seizure of the bearing relative to the shaft 30, and reduce damage to the mounting portion, an anti-corrosive shaft liner 50 is supported over the mounting portion 30m between the disk bearing inner race 20a and mounting portion. The shaft liner 50 is shown as a plastic cylinder with an axis 50a and an inner circumference approximately equal to the circumference of the mounting portion 30m. To facilitate assembly of the liner 50 to the shaft 30 with completely disassembling the disks 34 and components 36 and 38 from the shaft 30, the liner 50 may be spit as shown at 52 in Fig. 3 generally parallel to or at a slight angle relative to axis 50a of the cylinder and axis 30a of the disk gang shaft 30. The shaft liner 50 is formed from a tough plastic such as polyvinylchloride or similar material that is resistant to corrosion but is sufficiently flexible to fill the area of any gaps between the inner race 20a and the shaft surface.

As shown in Fig. 3, the length of the liner 50 is selected to span the inner race 20a and project into the shaft-mounted spacer components 36, 37 and 38 adjacent the bearing assembly 20 to help take up tolerances between the inner diameters of the mounted components and the outer surface of the shaft 30. In the configuration shown, the spacer component 37 fits snugly over the liner 50 and abuts the inner circumference of the component 38. The liner 50 also helps center the bearing inner race 20a and the components 36, 37 and 38 on the shaft 30 during assembly and protects the shaft 30 from damage. Slight misalignments between the shaft 30 and one or more of the spacing components 34, 36, 37 and the bearing inner race 20a can be accommodated by the shaft liner 50.

## Claims

1. A disk gang assembly (10) including a disk gang shaft (30) supported from a disk frame (12) by a standard (16), the standard (16) supporting a disk bearing (20) having an inner race (20a) receiving a mounting portion (30m) of the disk gang shaft (30), **characterized in** comprising: a non-metallic anti-corrosive shaft liner (50) supported over the mounting portion (30m) between the inner race (20a) of the disk bearing (20) and mounting portion (30m), wherein the shaft liner (50) protecting the mounting portion (30m) from seizure of the inner race (20a).

2. The disk gang assembly (10) as set forth in claim 1 wherein the shaft liner (50) is split (52) generally along an axis (50a) parallel to an axis (30a) of the disk gang shaft (30) to facilitate assembly of the shaft liner (50) unto the shaft (30).

3. The disc gang assembly (10) as set forth in claim 1or 2, wherein the shaft (30) flexing from a generally fixed axial position, wherein tolerances existing between the mounting portion (30m) and the inner race (20a) provide an area of gap therebetween, and the shaft liner (50) filling the area of the gap being supported over the mounting portion (30m) between the inner race (20a) of the disk bearing (20) and mounting portion (30m).

4. The disk gang assembly (10) as set forth in one of the claims 1 to 3, wherein the shaft liner (50) comprises a plastic material.

5. The disk gang assembly (10) as set forth in claim 4, wherein the plastic material comprises polyvinylchloride.

6. The disk gang assembly (10) as set forth in one of the claims 1 to 5 wherein the inner race (20a) and the mounting portion (30m) comprise cylindrically shaped surfaces, and the shaft liner (50) comprises a cylinder with a circumference approximately equal to the circumference of the mounting portion (30m).

7. The disk gang assembly (10) as set forth in one of the claims 1 to 6 including a spacing component (36, 37, 38) supported on the shaft (30), wherein the shaft liner (50) projects into the spacing component (34, 36, 37, 38) to provide a snug fit between the spacing component (34, 36, 37, 38) and the shaft (30).
